# EUROPEAN PATENT APPLICATION

(11) **EP 4 269 124 A1**
(43) Date of publication of application: **01.11.2023**
(21) Application number: 22382394.9
(22) Date of filing: 26.04.2022
(51) Int. Cl.: B42D 25/324, B42D 25/342, B42D 25/305, B42D 25/23, B42D 25/425, B42D 25/485, G06K 7/00, G07D 7/12, H04L 9/00

(54) **LENTICULAR ARRAY**

(71) Applicant: Ruiz Quevedo, Andres, 28027 Madrid (ES)
(72) Inventor: Ruiz Quevedo, Andres, 28027 Madrid (ES)
(74) Representative: Hernández Hernández, Carlos

(57) **Abstract**

Lenticular array (1) incorporated to a support (2) such as an identity card, having a dataset (3) unique to that support (2) where the lenticular array (1) is configured according to a method whereby microlens feature values (the microlens feature being, for instance, the length of the microlenses) are assigned to the characters of a digital code generated out of processing the dataset (3). In this way, the lenticular array (1) will be configured with microlenses of different length values, said configuration being unique to that lenticular array (1) and therefore to the support (2) to which said array (1) is incorporated. A method to verify the authenticity of the support (2) is aimed at detecting any manipulation of the dataset (3).

## Description

### Technical Field

The invention pertains to the field of security printing, and more specifically to arrays of microlenses incorporated as a security feature to supports that carry a dataset.

### Background Art

Arrays of microlenses, also called lenticular arrays, are used as optical security features in the field of security printing. The arrays are incorporated to a support, such as a banknote, an identification document (passport, identity card, driving license), any other valuable document or other items. An underlying image is fixed to the support (normally by printing) and the lenticular array is superimposed to the image. Depending on the configuration of the image and the array, a variety of optical effects can be obtained. The underlying image may consist of a picture, a text or a combination of both. Given that optical security features are inherently difficult to produce, a genuine document incorporating one such feature will be more difficult to forge, hence their functionality as a security feature.

Typically, the underlying image is a picture formed by the combination of two different individual pictures, which have been cut into thin stripes and printed on the support according to a pattern of alternating stripes. An array of semi cylindrical microlenses is superimposed to the underlying image, in such a way that there are two stripes (corresponding each to one of the individual pictures) under each microlens. The optical effect consists in that an observer will see in full one of the individual pictures when looking from a certain angle, and another of the individual pictures when looking from a different angle or tilting the support.

Some supports contain a dataset which is unique to it. Such dataset may be a serial number (in banknotes, which may also carry a printing plate number common to the same series of banknotes), name of the holder, card number (credit cards), picture and name of the holder, passport or ID card number (identification cards), picture and name of the holder, license number (driving license) or, for any of those supports, any unique number or letter code. In these cases, a greater tamper-proof security can be achieved by optical features that comprise an underlying image which is related to the unique dataset of a specific support (for instance, the support is an identity card and the image underlying the microlenses is the card holder's picture). Thus, the support is personalized, in that the optical security feature is unique to that support. This result can be produced, typically where the support is a plastic card, by using the Multiple Laser Image (MLI) or Changeable Laser Image (CLI) laser printing techniques. In one known method, an array of microlenses is embossed in the card and a composite image (made up of two or more different images) is laser - printed through the microlenses. This composite image can be tailored for each document by including personal data of the supporting card. In another technique, the card is prepared with a CLI/M LI window wherein a lenticular array is superimposed. A personalized image (e.g., a text such as the name of the holder or a code; or a picture of the holder) is printed in the window at two different angles.

If for example the support is an identity card, in the event that it is stolen, a fake picture could not be substituted for the original main picture of the identity card, because such fake picture would not match the one under the microlenses, and therefore the tampering would be found out. Removing the laser-printed picture and substituting a fake one would be an extremely complex operation requiring very sophisticated equipment. However, if a piece of data different from the one covered by the lenticular array, such as the name of the holder, were tampered with, the personalized optical security feature would be no help. One of the aims of the present invention is to overcome this shortcoming.

In the described examples, the efforts at a greater tamper-proof security have been directed at the underlying image. In other cases, the efforts have been directed at the lenticular array itself. EP2927881A1, Data carrier, (Gemalto S.A.), 07-10-2015, discloses one such example, where lenticular elements arranged on a security document incorporate a marking (text, code or microstructure), or a complex geometry of the lenses (e.g., modified curvature, radius, lens shape). In WO2020237259A1, Use of nanoparticles to tune index of refraction of layers of a polymeric matrix to optimize micro-optic (mo) focus (Crane & Co, Inc.), 26.11.2020, materials are added to the microlenses, to vary their optical properties. Thus, the microlenses, in addition to their traditional function of being an instrument to provide a view of the underlying image, incorporate a security feature.

In all the cited examples, typically the lenticular arrays incorporated to the same series of supports will have the same configuration (all their microlenses have identical shape, size, arrangement on the document, etc.) Obviously, it would be pointless to create arrays of different configurations for the same type of support. Accordingly, for the manufacturing of the lenticular arrays a chosen array pattern is reproduced in every document of the series by serial-production techniques such as thermoforming, embossing or screen printing.

The present invention focuses on the microlenses as a security feature in themselves, apart from their optical role; but does so by proposing a lenticular array whose configuration varies from one item to another, according to the dataset in the support to which the lenticular array is incorporated. Thus, any tampering with any piece of data in the support would be found out because there would be a mismatch between the altered dataset and a lenticular array which was configured according to the original dataset. The claimed lenticular array would function as a sort of bar code that personalises the support.

### Summary of the invention

In one aspect, the subject matter of this patent is a lenticular array (1) incorporated to a support (2), the support (2) carrying a dataset unique to it. By support (2) it is understood any item to which a lenticular array (1) can be affixed. Typical supports (2) are valuable personal documents, such as identity cards, driving licenses, passports or credit cards. Other supports (2) may be bank notes, security tags or security labels attached to valuable items, providing that each tag or label carries a dataset (3) specific to it.

The invention is characterized in that the configuration of the microlenses constituting the lenticular array (1) is related to the dataset (3). Configuration of the microlenses refers to any feature concerning their physical appearance or their composition. For instance, one feature can be the length of the microlenses constituting the array (1). Thus, according to the invention, the length of the microlenses constituting an array (1) incorporated to a specific support (2), for instance an identity card, would be related to the dataset (3) (personal holder's data) of that specific card (2) and therefore the configuration of the lenticular array (1) would be unique to that card (2). A lenticular array (1) incorporated to any other identity card (2) would present a different configuration, because that other identity card (2) would present a different dataset (3).

The length of the microlenses is a geometrical feature. Other geometrical features of the microlenses that affect their configuration can be their radii, or their shape (semi-cylindrical or semi-spherical lenses). Semi-spherical lenses are arranged in lines, so the variable feature could be the number of such lenses which are arranged in a line. Also, non-geometrical features may affect the configuration of the microlenses, such as incorporating or not a stimuli responsive feature. Stimuli responsive feature means any ingredient (for example a fluorescent marker) incorporated to the chemical composition of a microlens, whereby the microlens would react to external stimuli, such as an electromagnetic radiation (e.g., light), heat or pressure.

The configuration of the array of microlenses is such that at least one of the microlenses constituting the lenticular array (1) presents one feature (length, shape, radii, stimuli responsive material, number of semi-spherical lenses forming that microlens, etc.) which is different from the corresponding feature of at least another microlens of the lenticular array. E.g., if at least one microlens of the lenticular array (1) measures one centimetre, at least another microlens of that array (1) will not measure one centimetre. Or, where the microlenses of the lenticular array are formed by the addition of semi-spherical lenses, if for instance at least one microlens of the lenticular array (1) is made up of 10 semi-spherical lenses, at least another microlens of that array (1) will not be made up of 10 semi-spherical microlenses. In an embodiment, two or more different configuration features are combined in at least one of the microlenses, which, for example, would have a one-centimetre length plus a fluorescent marker, whereas at least another microlens of the array would not present both features.

The relationship between microlenses configuration and dataset (3) is established through a digital code generated from the dataset.

In another aspect, the invention concerns a method to produce a lenticular array (1) whose configuration is related to a unique dataset (3) in a support (2). At the time of producing the lenticular array (1), the manufacturer may be already in possession of the support (2) with the dataset (3) incorporated. Or the lenticular array (1) manufacturer may only be in possession of the dataset (3) and the support (2) is to be produced at a later stage, therefore at that point the dataset (3) is destined for incorporation into a support (2).

In an embodiment, the method is performed with the intervention of a system comprising a data processing apparatus and a printing machine, preferably an ink jet printing machine. The data processing apparatus is operatively coupled to a computer program comprising instructions to cause the system to perform the steps of the method to produce a lenticular array (1).

The whole or part of the information in the dataset (3) (e.g., personal data of an identity card holder) can be recorded in an alphanumeric file that would be unique to that supporting document (2). Such alphanumeric file would be variable in length with respect to the file obtained out of a dataset (3) from any other identity document (2) since the personal data (2) therein would be different. The alphanumeric file can be run through an algorithm to obtain a digital code. Thus, the claimed method comprises a first step of generating a digital code by processing the dataset (3). In an example, the digital code is a binary code. In another example, the digital code is a fixed-sized digital code and most preferably a hash code.

A second step of the method comprises assigning a microlens feature value to each character of the digital code. By way of example, a selected microlens feature value can be length of the microlenses. Thus, one character of the digital code would be assigned a 1-centimetre length and the subsequent characters would be assigned microlens feature values representing 1-millimetres increments. The shortest microlens value assigned must be sufficient for a microlens of that length to cover the height of the underlying image, so that the optical function of the lenticular array (1) is not compromised by this variable - length configuration.

In the embodiment where the digital code is a binary code, the "0" digit and the "1" digit are assigned a different microlens feature value. For instance, if the selected value is length, the "0" digit can be assigned a 2-centimetre length and the "1" digit, a 2,5-centimetre length.

Where the digital code is a hash code, in one embodiment each character of the hash code is subsequently converted into a four-digit binary code and the "0" digit and the "1" digit of the resulting binary code are assigned a different microlens feature value, therefore each group of four microlenses will represent one value of the hexadecimal code.

A third step of the method is the actual incorporation of the lenticular array (1) to the support (2). The features of the microlenses constituting the array (1) will correspond to the microlens feature values which, according to former method step, have been assigned to the characters of the digital code.

In the state of the art, all documents belonging to a series will have lenticular arrays with identical configuration. Accordingly, serial-production methods are employed to produce them (embossing, thermoforming, screen printing, etc). By contrast, the claimed lenticular arrays (1) have a configuration that depends on a unique dataset (3). Since no two supports will have the same dataset, no two supports (2) will have an identically configured lenticular array (1). This means that serial-production methods are no use to implement this step of the method and other techniques must be utilized.

One suitable technique may be ink jet printing. Use of ink jet printing for the manufacturing of lenticular arrays is known, but in fields of technology other than security printing, like optics and in photovoltaic cells, as described, for example, in US201001811901A1 Inkjet printing of microlenses for photonic applications (Univ. of Florida Research Foundation Inc.), 18.10.2011. Inkjet printing reproduces the content of an electronic file, whose information may be caused to change from one copy to another, thus allowing to change the lenticular structure for each item produced, or as desired. This is unlike the techniques used in security lenticular arrays (thermoforming, embossing or screen printing), where the same configuration is repeated throughout a whole series. Other methods such as double-photon polymerization, laser forming or extrusion systems can be used to manufacture arrays of microlenses according to the contents of an electronic file.

In an embodiment, the method includes the additional step of incorporating the digital code into the support (2). This can be done preferably by any known printing technique. The purpose of printing the digital code in the support (2) is to facilitate the task of verifying the authenticity of the support (2).

In a further aspect, the subject matter of the present invention is a support (such as a personal document, a banknote, a tag or a label attached to a valuable item) that carries a dataset (3) which is unique to it and that it incorporates a lenticular array (1), wherein the configuration of the microlenses constituting the array (1) is related to the dataset (3). In an embodiment, such support additionally incorporates a digital code generated from the dataset (3).

In a further aspect, the invention refers to a method to verify the authenticity of a support (2) that carries a dataset (3) which is unique to it and that incorporates a lenticular array (1) whose configuration is related to the dataset (3).

This authenticity-verification method normally will be carried out by a public official such as a policeman performing an identity check on an individual, or by a private person concerned with the support (2), such as an employee in a shop where a client intends to pay with a credit card. The method would be implemented with the assistance of a portable computing device, such as a smartphone or tablet with a computer program stored therein and with an integrated photographic camera.

The method comprises a first step of obtaining an image of the support (2), the image containing the dataset (3) and the lenticular array (1). This would be performed with the photo camera incorporated in the computing device in possession of the person carrying out the method. In a second step, the dataset (3) contained in the image would be processed and a digital code would be generated. This digital code would be identical to a first digital code generated when the lenticular array (1) was produced. A third step consists of cross checking on the one side the digital code resulting from the processing and, on the other, the configuration of the microlenses constituting the array (1). Since the microlenses constituting the array have been configured according to the digital code obtained during the production phase of the lenticular array (1), any discrepancies now detected would be due to the fact that the dataset (3) in the support (2) subject to verification has been manipulated and therefore does not match the genuine dataset (3) which was originally used to generate the first digital code.

In a further aspect, the invention refers to a method to verify the authenticity of a support (2) that carries a dataset (3) which is unique to it and that incorporates a lenticular array (1) whose configuration is related to the dataset (3), the support (2) also incorporating (for instance, by having it printed) a digital code which was generated at the production phase of the lenticular array (1). This method is equally implemented by a public official or private person concerned with the authenticity of the support (2).

The method comprises a first step of obtaining an image of the support (2), the image containing the digital code and the lenticular array (1). In a second step, the method involves cross checking the digital code contained in the image and the configuration of the lenses constituting the array (1). This verification method is simpler because the support (2) already incorporates the first digital code, so there is no need to process the dataset (3) in the picture to generate such digital code. Any discrepancies would be due to a manipulation of the dataset (3) in the document (2) subject to verification, including a manipulation of the printed digital code.

### Brief description of drawings

Fig. 1: Support comprising a dataset and a lenticular array configured according to the dataset.
Fig. 2: Steps of the method to produce a lenticular array, in an example where the lenticular array is configured according to a digital MD5 hash code.
Fig. 3: Steps of the method to produce a lenticular array, in an example where the lenticular array is configured according to a binary digital code obtained from a digital MD5 hash code.

### Description of embodiments

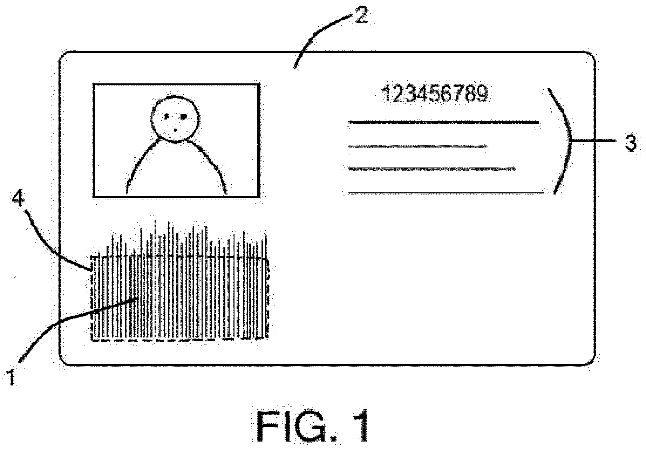

In one aspect, the subject matter of this patent is a lenticular array (1) incorporated to a support (2), the support (2) carrying a dataset (3) unique to it. In an embodiment represented in Fig. 1, a lenticular array (1) is incorporated to a support which is a national identity card (2) issued by a State authority to its nationals. The card carries a dataset (3) which is unique to it, because it relates to the data of a specific person.

The lenticular array (1) is superimposed to an underlying image (4) in respect of which the lenticular array (1) produces an optical effect. The present invention is not concerned with the configuration of the underlying image (4) and therefore it can be implemented with any sort of them. For instance, the underlying image may consist of the card holder's picture laser-printed to the support (2) or it may be a more standard striped two-imaged picture. Fig. 1 does not represent any specific underlying image (4), but only the area occupied by it, indicated by a dotted line

In known lenticular arrays, all microlenses would have the same features, particularly the same type of lens (semicylindrical or semi spherical) and the same length. By contrast, the claimed lenticular array (1) alternates microlenses of different features, e.g., different length, as represented in Fig. 1. Thus, at least one of the microlenses constituting the lenticular array (1) presents one feature (e.g., length) which is different from the corresponding feature (length) of at least another microlens of the lenticular array (1).

Such configuration of the microlenses is related to the specific dataset (3) in the identity card (2) and therefore, no other identity card (2) issued by the same State authority will incorporate a lenticular array (1) with that same lenticular array configuration. This specificity will be used to verify the authenticity of the support (2). The relationship between configuration of the lenticular array (1) and dataset (3) is established through a digital code as will be explained hereinafter.

As seen in Fig. 1, the shortest-length microlenses reach the upper limit of the area covered by underlying image (4), whereas longer microlenses surpass that limit. Thus, where the selected microlens feature is length, it is ensured that the full area occupied by the underlying image (4) is covered by the lenticular array (1) so that its optical function is not compromised.

In another aspect, the subject matter of the present patent is a method to produce a lenticular array (1) whose configuration is related to a unique dataset (3) in a support (2).

In an embodiment, the support (2) is an identity card such as described in preceding paragraphs. The manufacturer of the lenticular array (1) is in possession of the card (2) with the dataset (3) already incorporated to it. The method can be implemented by processing the whole dataset (3) in the support (2) or a chosen portion of it. In this embodiment, the dataset (3) that will be subject to processing will be a portion of the information normally present in an identity card, such information consisting, as an example, of the following text data: Name: "John Smith". Address: "Main Street 7, DublinE58EF". Card number: "123456789". It must be understood that from a given dataset many other options are possible, such as any combination between letters or numbers forming the dataset (for instance, the portion of the dataset to be processed would made up of the first two letters of name and surname plus the card number).

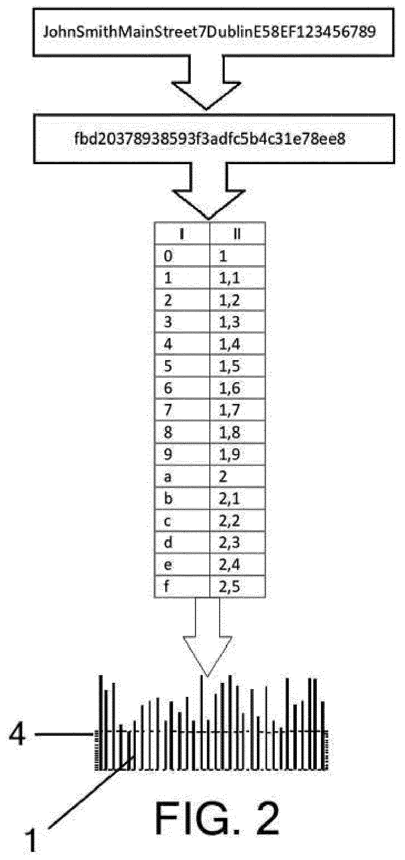

Fig. 2 is a diagram illustrating the steps of the method to produce the lenticular array (1) in one example of implementation. The method comprises a first step of generating a digital code by processing the dataset (3). In an embodiment, the exemplified dataset (3) is recorded in an alphanumeric electronic file whose content would be: "JohnSmithMainStreet7DublinE58EF123456789". Different methods known to the expert can be used to convert such input information into a digital code.

In an embodiment, the input is run through a MD5 hashing algorithm with a hashing tool. The output would be the following digital code: "fbd20378938593f3adfc5b4c31e78ee8". As with any MD5 hashing algorithm, the digital code would have 32 characters expressed in the hexadecimal numeral system (i.e. numbers are represented using a base of 16, with characters "0"-"9" representing values from 0 to 9 and characters "a" to "f" or alternatively "A" to "F" representing values from 10 to 15).

Having generated a digital code, the second step of the method is implemented, namely, to assign a microlens feature value to each character of the digital code, in this case to each of the 32 characters in the generated MD5 hash code. This means that the resulting lenticular array (1) will have 32 microlenses.

To assign a microlens feature value to each of the 32 lenses, firstly at least one microlens feature must be selected, for instance, the length of the microlens. As we are working with a digital code expressed in the hexadecimal system, there will be 16 possible lengths of a microlens. For instance, the character "0" in a hash digital code would be assigned a microlens feature value of 1 centimetre and the subsequent 15 characters would be assigned values with 1-millimetre increments. Accordingly, the longest microlens value would be 2,5 centimetres. The table contained in Fig. 2 represents in column I the 16 hexadecimal characters and in column II the microlens length feature values assigned to each character. This does not mean that, in a given 32-microlens lenticular array (1), there will be lenses of each possible 16 lengths, because in any specific hash digital code the same character may occur several times and one or more characters may not occur at all. It means only that the lengths of the 32 microlenses will be within those 16 possible values.

However, a support (2) with a lenticular array (1) whose 32 microlenses may have up to 16 different lengths will require accurate optics in the photographic camera employed to verify the authenticity of the support (2). To address this possible disadvantage, an alternative example of the claimed method is disclosed, whereby the digital code is again a hash code, each character thereof being subsequently converted into a four-digit binary code, wherein the "0" digit and the "1" digit or the resulting binary code are assigned a different microlens feature value, therefore each group of four microlenses will represent one value of the hexadecimal code

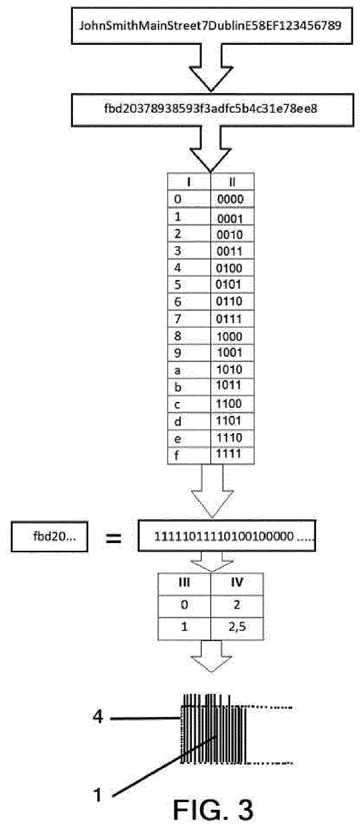

This embodiment is represented in Fig. 3. Its explanation requires going back to the first step of the method which has been described above, where the digital code "fbd20378938593f3adfc5b4c31e78ee8" is a MD5 hash code, therefore expressed in hexadecimal characters ("0"-"9" and "a" to "f'). Firstly, each of those 16 characters of the hexadecimal system is assigned a four-digit binary code, i.e., a code expressed in a two-symbol system of "0" and "1" values. The table contained in Fig. 3 represents in column I the 16 hexadecimal characters and in column II the four-digit binary code assigned to each character, where for instance character "a" is assigned the four-digit code "1010".

Secondly, a binary digital code is generated, proceeding from the exemplified digital MD5 hash code and assigning the corresponding four-digit binary code to each of the MD5 hash code's 32 characters according to the equivalences at the table in Fig. 3. The resulting digital code will contain 128 characters (32x4), meaning that the resulting lenticular array (1) will contain 128 microlenses. Thus, the generated binary digital code corresponding to the first five characters "fbd20..." of the original MD5 hash code would be "11111011110100100000...", each group of four digits corresponding to one character of the hash code.

The second step of the method (assigning a microlens feature value to each character of the digital code), is performed by assigning a microlens feature value to the digit "0" of the binary code and a different microlens feature value to the digit "1". For instance, if the chosen feature value is the length of the microlenses, the "0" could represent a microlens length value of 2 centimetres and the "1", 2'5 centimetres, as shown in the table contained in Fig. 3, columns III and IV respectively. Thus, each of the 128 microlenses of the lenticular array (1) would measure either 2 or 2'5 centimetres. The 128-digit binary code would establish the order in which microlenses of either length would alternate in the lenticular array (1). With only two possible microlens lengths, the verification is easier, notwithstanding the fact that this embodiment requires a greater number of lenses forming the lenticular array (1)

If the chosen underlying image (4) is smaller than the lenticular array (1), the lenticular array (1) would extend beyond the underlying image (4) but the optical function of the lenticular array (1) would not be compromised because in any event the whole area of the underlying image would be covered by the lenticular array. Likewise, in some implementations of the invention, for instance where the lenticular array (1) has been configured according to a 32-character digital code and a microlens corresponds to each character, more than 32 microlenses may be needed to cover an underlying image (4). In that case, to ensure its optical function, the lenticular array would be completed with non-coded lenses, i.e., lenses whose configuration is not related to the dataset. But even in this case, the configuration of the lenticular array (1) as a whole would still be related to the dataset (3).

In the above two alternative implementations of the method (digital code being a hash code or a binary code obtained from the hash code; and in both cases, the selected microlens feature value being length), a shortest microlens length value must be chosen that is sufficient to cover the length of the underlying image (4), so that the optical function of the lenticular array is not compromised. Longer lens will surpass the underlying image (4), but this will not have any incidence in the performance of the lenticular array (1), because in any even the whole area of the underlying image would be covered by the lenticular array

In alternative implementations, microlens features other than length may be selected, for instance, the feature would be: having or not having a fluorescent marker. Thus, where the generated digital code is an MD5 hash code, each of its 16 possible characters would be assigned a microlens feature value that would be either "marked" or "not marked". As this feature does not concern the geometry of the microlenses, the lenticular array (1) would be configured with microlenses of the same external appearance, the variation between them being related to an intrinsic quality in their composition.

The third step of the method would be performed in the same way for all the examples described. This step concerns the actual incorporation of the lenticular array (1) to the support (2). Fig. 2 represents a portion of the resulting lenticular array (1), showing the different lengths of the microlenses, according to the table of assigned values for this embodiment, where the digital code is a hash code, therefore with 32 characters and accordingly with a 32-microlenses lenticular array of 16 possible length values. Likewise, Fig. 3 represents a portion of the resulting lenticular array (1), showing the combination of the two possible lengths, according to the table (columns III and IV) of two possible assigned length values for this embodiment, where each of the 32 characters of a hash digital code has subsequently been converted into a 4-digit binary code.

In an embodiment, the incorporation of the lenticular array (1) is performed by printing the lenticular array (1) on the support (2) by means of a commercially available ink jet printing machine. The data processing apparatus feeds the digital code to the ink jet printing machine, that will produce a lenticular array (1) where the features of the whole or of a portion of the microlenses constituting the lenticular array (1) will correspond to the microlens feature values contained in the digital code.

In an embodiment of the method to produce a lenticular array (1), an additional step is envisaged, where the digital code is incorporated to the support (2). This incorporation can be performed by any known method, for instance, standard digital printing. In this embodiment, a support (2) will have printed on it a digital code plus the lenticular array (1) which has been configured according to that digital code. This will have an influence in the way the authenticity of the support (2) is verified.

In another aspect, the invention concerns a method to verify the authenticity of a support (2) that carries a dataset (2) which is unique to it. The support (2) incorporates a lenticular array produced by the method described, but the support (2) does not incorporate the digital code according to which the lenticular array (1) has been configured.

The person implementing the authenticity-verification method (for instance, a police officer at a border control) is provided with a portable computing device featuring a photographic camera. The officer uses the camera to take a picture of the support (2), said picture containing the dataset (3) and the lenticular array (1). A computer program stored in the computing device processes the image, creating a digital file containing the dataset (3) and generating a digital code. Where one of the features which has been selected to configure the lenticular array (1) is a stimuli-responsive feature, prior to taking the picture a suitable device must be employed to stimulate a response from the microlenses. For instance, if the stimuli-responsive feature consists of some microlenses having a fluorescent marker, the lenticular array must be lighted up with a portable infrared device and the picture must be taken at that moment.

To generate the digital code, the computer program will process the same portion of dataset (3) according to which the lenticular array (1) in the support (2) has been configured and said dataset (2) will be processed according to the same criteria (for instance, running the input dataset through a MD5 hashing algorithm). Accordingly, an identical digital code will be generated.

In the next step of the method, the computer program performs a cross checking of the digital code and the lenticular array (1). To this end, the program has been inputted the microlens feature value corresponding to each character of the digital code. For instance, where the selected microlens feature is length and a MD5 hash code has been used, the program has been inputted that a microlens length of 1,6 cm. corresponds to the first character ("6") of the above-exemplified MD5 hash code (or that, where the characters of the hash code have subsequently been converted into four-digit binary codes, the first portion of the code ("0110") corresponds to four microlenses with respective lengths of 2 cm, 2,5 cm, 2,5 cm. and 2 cm). The program reads the microlenses feature values and performs the cross check with the inputted data. Any mismatch would have to be due to a manipulation of the dataset (2).

In an alternative embodiment, the computer program processing the dataset (2) is not stored in the portable computer device in the possession of the person performing the check, but in a separate computer server, typically in a remote location with respect to the portable device. The person sends the picture of the support (2) to the computer server by any known telecommunication means (for instance, wireless communication), and the server performs the cross-checking operations, returning a conformity or non-conformity message.

In a further aspect, the subject matter of the invention is a method to verify the authenticity of a support (2) that incorporates a digital code which was generated at the production phase of the lenticular array (1). This method is implemented by the same sort of persons as in the one previously described and with the assistance of the same equipment. The first step involves taking a picture of the support (2) including the digital code incorporated to the support (2) and the lenticular array (1). The second and last step involves cross checking the digital code contained in the image and the image of the lenticular array, an operation which is performed in the same way as has been previously explained.

## Claims

1. Lenticular array (1) incorporated to a support (2), the support (2) carrying a dataset (3) unique to it, **characterized in that** the configuration of the lenticular array (1) is related to the dataset (3).

2. Lenticular array according to claim 1, **characterized in that** at least one of the microlenses constituting the lenticular array (1) presents one feature which is different from the corresponding feature of at least another microlens of the lenticular array (1).

3. Lenticular array (1) according to claim 2, **characterized in that** the at least one feature of at least one of the microlenses is selected from a group comprising: length, shape, radii, number of semi-spherical microlenses forming one line of microlenses, or a stimuli-responsive feature.

4. Lenticular array (1) according to claim 3, **characterized in that** at least one of the microlenses of the lenticular array (1) combines two or more different features.

5. Lenticular array (1) according to claim 1, **characterized in that** the relationship between the at least one feature of at least one of the microlenses and the dataset (3) is established through a digital code generated from the dataset (3).

6. A method to produce the lenticular array (1) of claim 1, the method comprising:
a) Generating a digital code by processing a dataset (3), the dataset (3) having been incorporated into a support (2) or being destined for incorporation into a support (2).
b) Assigning a microlens feature value to each character of the digital code.
c) Incorporating a lenticular array (1) to a support (2), where the features of all or of a portion of the microlenses constituting the lenticular array (1) correspond to the microlens feature values assigned to the characters of the digital code.

7. The method of claim 6, including the additional step of incorporating the digital code into the support (2).

8. The method of claim 6, wherein the digital code is a binary code and wherein the "0" digit and the "1" digit of the binary code are assigned a different microlens feature value.

9. The method of claim 6, wherein the digital code is a hash code and wherein each of the hexadecimal characters forming the hash code is assigned a different microlens feature value.

10. The method of claim 6, **characterized in that** the digital code is a hash code, and **in that** each character of the hash code is converted into a four-digit binary code and wherein the "0" digit and the "1" digit of the resulting binary code are assigned a different microlens feature value.

11. A support (2) incorporating the lenticular array (1) of claim 1.

12. The support (2) of claim 11, additionally incorporating the digital code of claim 5.

13. A method to verify the authenticity of a support (2) that carries a dataset (3) which is unique to it and that incorporates a lenticular array (1) which has been manufactured according to the method of claim 6, the method comprising:
a) Obtaining an image of the support (2), the image containing the dataset (3) and the lenticular array (1).
b) Generating a digital code out of processing the dataset (3) contained in the image.
c) Cross checking the digital code and the configuration of the microlenses constituting the lenticular array (1).

14. A method to verify the authenticity of a support (2) that carries a dataset (3) which is unique to it and that incorporates a lenticular array (1) which has been manufactured according to the method of claim 7, the method comprising:
a) Obtaining an image of the support (2), the image containing the digital code and the lenticular array (1).
b) Cross checking the digital code contained in the image and the configuration of the lenses constituting the lenticular array (1).

15. A system comprising a data processing apparatus and a printing machine, the system comprising means adapted to execute the steps of the method of claim 6.

16. A computer program comprising instructions to cause the system of claim 15 to execute the steps of the method of claim 6.

17. A computer readable medium having stored thereon the computer program of claim 16.
